# EUROPEAN PATENT APPLICATION

(11) **EP 1 006 476 A2**
(43) Date of publication of application: **07.06.2000**
(21) Application number: 99308307.0
(22) Date of filing: 21.10.1999
(51) Int. Cl.: G06K 9/38

(54) **Method of enhancing characters in an original binary image of a document**

(30) Priority: 18.11.1998 US 195060
(71) Applicant: NCR INTERNATIONAL INC., Dayton, Ohio 45479 (US)
(72) Inventor: Wesolkowski, Slawomir B., Kitchener, Ontario N2C 2H7 (CA)
(74) Representative: Williamson, Brian

(57) **Abstract**

A method of processing a bank check having a number of characters thereon comprises the steps of (a) scanning the bank check, (b) obtaining color image data associated with the bank check when the bank check is scanned, (c) obtaining grayscale image data associated with the bank check based upon the color image data, (d) binarizing the grayscale image data to provide an original binary image of the bank check, and (e) extracting relevant character information from the color image data to enhance a relatively low quality character in the original binary image of the bank check. Preferably, the grayscale image data is thresholded to extract relevant information therefrom. Also, preferably, the color image data is processed in a number of different color vector planes to extract relevant information therefrom. The number of color vector planes is preferably three different color vector planes including a red color vector plane, a green color vector plane, and a blue color vector plane.

## Description

The present invention relates to character enhancement, and is particularly directed to a method of enhancing characters in an original binary image of a document, such as a bank check.

A typical bank check has a courtesy amount field which contains either machine-printed or handwritten characters. In a continuing trend to automate banking operations, efforts have been made to machine read characters in the courtesy amount of the check. The machine-printed or handwritten characters in the courtesy amount field of the check need to be extracted prior to being subjected to a character recognition engine at a subsequent operation.

To extract relevant character information from the courtesy amount field of the check, the check is typically moved past a scanning device to obtain a digitized image of the check. More specifically, as the check moves past the scanner device, the scanner device generates successive scan lines of pixels to produce a matrix of pixels associated with the check. Each pixel is usually represented by gray scale image data in which a particular gray level is associated with the pixel. For example, each pixel may have any one of 256 gray levels associated therewith, ranging from completely black (level zero) to completely white (level 255).

A character extraction scheme is then applied to each pixel having one of 256 gray levels to extract relevant character information therefrom to provide an extracted image of the characters in the courtesy amount field of the check. A number of character extraction schemes is known. One character extraction scheme includes a binarization method which attempts to de-emphasize unimportant pixels (noise for example). The resulting extracted image of the characters in the courtesy amount field of the check is a binary image. It is important to use a quality character extraction scheme when a high performance optical character recognition (OCR ) engine, for example, is used to further process the extracted binary image of the characters in the courtesy amount field of the check. If a character in the courtesy amount field of the check is not extracted properly, the character recognition engine which later acts on the extracted binary image may perform poorly.

A disadvantage in using a binarization method to provide an extracted binary image of the characters in the courtesy amount field of the check is that some characters, especially lighter ones, in the extracted binary image of the check may be of relatively low quality (thinned or broken). It is desirable to enhance relatively low quality characters in the extracted binary image to provide relatively high quality characters. A number of character enhancement schemes is known. Typically, in the known character enhancement schemes, a character in the extracted binary image of the courtesy amount field of the check is enhanced based upon some relevant character information contained in the extracted binary image itself.

It is an object of the present invention to address one or more of the problems or disadvantages of the prior art discussed above.

In accordance with one aspect of the present invention in there is provided, a method of enhancing a character in an original binary image of a document which has been originally scanned to obtain color image data comprising the step of (a) extracting relevant character information from the color image data to enhance the character in the original binary image of the document. Preferably, step (a) includes the step of (a-1) processing color image data in a number of different color vector planes to extract relevant information therefrom. Also, preferably, the number of color vector planes is three including a red color vector plane, a green color vector plane, and a blue color vector plane.

In accordance with another aspect of the present invention there is provided a method of processing a bank check having a number of characters thereon comprising the steps of (a) scanning the bank check, (b) obtaining color image data associated with the bank check when the bank check is scanned in step (a), (c) obtaining grayscale image data associated with the bank check based upon the color image data obtained in step (b), (d) binarizing the grayscale image data obtained in step (c) to provide an original binary image of the bank check, and (e) extracting relevant character information from the color image data obtained in step (b) to enhance a relatively low quality character in the original binary image of the bank check obtained in step (d).

Preferably, step (d) includes the step of (d-1) thresholding the grayscale image data to extract relevant information therefrom. Also, preferably, step (e) includes the step of (e-1) processing color image data in a number of different color vector planes to extract relevant information therefrom. The number of color vector planes is preferably three including a red color vector plane, a green color vector plane, and a blue color vector plane.

Embodiments of the present invention will now be described, by way of example, with reference to the accompanying drawings, in which:
Figure 1 is a block diagram representation of a bank check processing system embodying the present invention;
Figure 2 is a diagram of a bank check having a courtesy amount field in which machine-printed characters are printed;
Figure 3 is a diagram of relatively low quality characters in an original binary image of the courtesy amount field of the bank check of Figure 2;
Figure 4 is a diagram of the relatively lower quality characters of Figure 3 which have been enhanced based upon color image data associated with the bank check of Figure 2; and
Figure 5 is a flowchart depicting a process carried out by the bank check processing system of Figure 1 in accordance with the present invention to provide the enhanced characters of Figure 4.

The present invention is directed to a method of extracting relevant character information from fields of color image data obtained from scanning a document to enhance characters in an original binary image of the document. The document may be of any type. By way of example, a document in the form of a bank check is processed in accordance with the present invention.

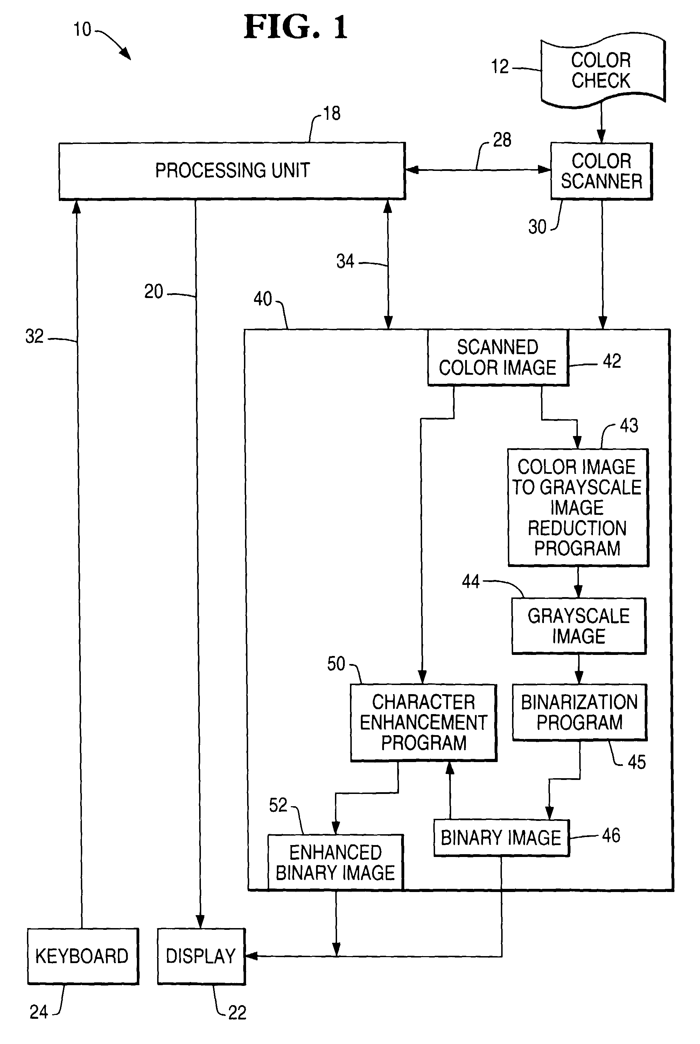

Referring to Figure 1, a bank check processing system 10 includes a processing unit 18 which is electrically connected via bus line 20 to a display 22. The processing unit 18 is also electrically connected via bus line 32 to a keyboard 24 and via bus line 34 to a system memory 40. The system memory 40 includes memory space which stores, inter alia, a number of application programs, scanned color image data, grayscale image data, and binary image data. The application programs stored in the system memory 40 include a color image to grayscale image reduction program 43, a binarization program 45, and a character enhancement program 50 in accordance with the present invention.

The bank check processing system 10 further includes a color scanner device 30 which is electrically connected via bus line 28 to the processing unit 18. Preferably, the processing unit 18 is a microcomputer, and the system memory 40 is a random access type of memory. Suitable microcomputers and memories are readily available in the marketplace. Their structure and operation are well known and, therefore, will not be described.

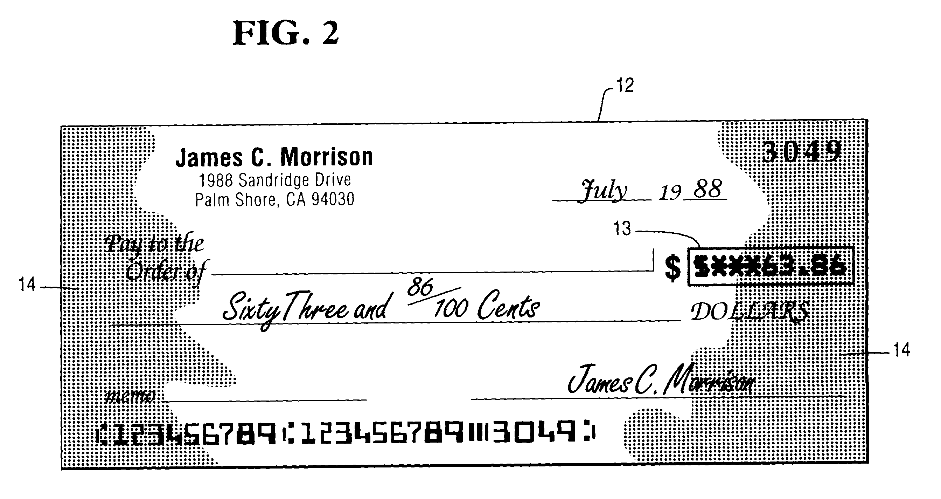

During operation, the color scanner device 30 lifts a color image of a bank check 12 (see also Figure 2) as the check moves past the color scanner device. The check 12 has a colored background 14 as shown in Figure 2. A middle portion of the colored background 14 of the check 12 in Figure 2 is removed to more clearly show certain information on the check. For the purpose of describing the present invention, it is assumed that the color scanner device 30 lifts a color image of only the courtesy amount field 13 of the check. For simplicity, it is assumed that the courtesy amount field 13 of the check 12 contains only machine-printed data.

The color scanner device 30 produces pixels each pixel being represented as a three dimensional color vector. Preferably, the three dimensional color vector includes a red color vector plane, a green color vector plane, and a blue color vector plane. The three dimensional color vector associated with each pixel is stored as color image data 42 in the system memory 40 as shown in Figure 1. The color image data 42 associated with all the pixels form a color image (not shown) of the check 12. The process of lifting a color image of the courtesy amount field 13 of the check 12 and storing the color image as color image data 42 in the system memory 40 is known and, therefore, will not be described.

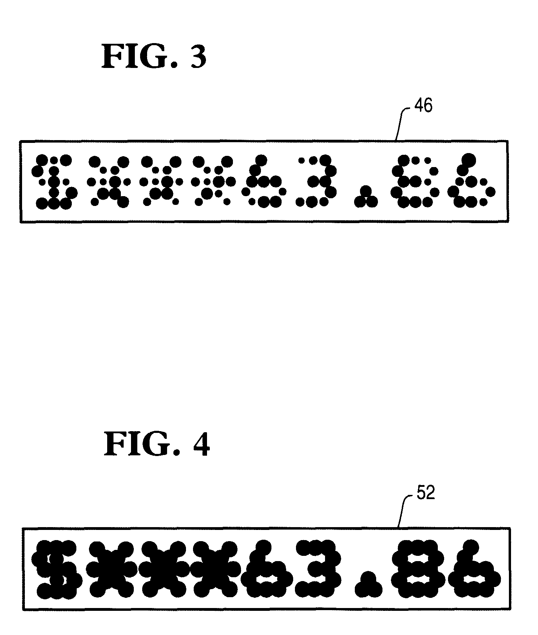

After the courtesy amount field 13 of the check 12 is stored as color image data 42 in the system memory 40, the color image data 42 is reduced to grayscale image data 44 using a color image to grayscale image reduction program 43. The grayscale image data 44 is then binarized using the binarization program 45 to provide an original binary (extracted) image 46 of the check 12, as shown in Figure 3. The quality of the characters in the binary image 46, as shown in Figure 3, is relatively low as compared to the quality of the characters in the original courtesy amount field 13 of the check 12 as shown in Figure 2.

The character enhancement program 50 processes the color image data 42 in the system memory 40 in accordance with the present invention to enhance low quality characters in the original binary image 46 of the check 12. In particular, the character enhancement program 50 is executed to extract relevant character information from the color image data 42 stored in the system memory 40 to enhance characters in the original binary image 46 of the check 12.

During operation of the check processing system 10 in accordance with the present invention, the processing unit 18 receives data via bus line 28 from the color scanner device 30 and reads the color image data 42 stored in the system memory 40. The processing unit 18 processes the color image data 42 using the binarization program 45 stored in the system memory 40 to provide the original binary image 46 as shown in Figure 3. The processing unit 18 then processes the original binary image 46 and the color image data 42 using the character enhancement program 50 stored in the system memory 40 to provide an enhanced binary image 52 as shown in Figure 4. The enhanced binary image 52 shown in Figure 4 is also stored in the system memory 40.

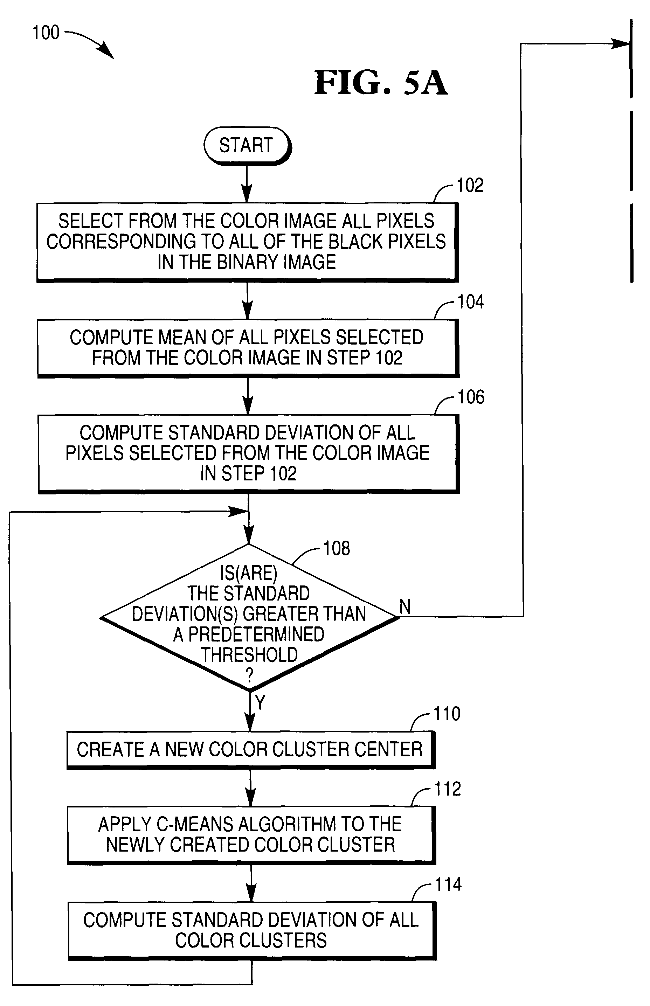

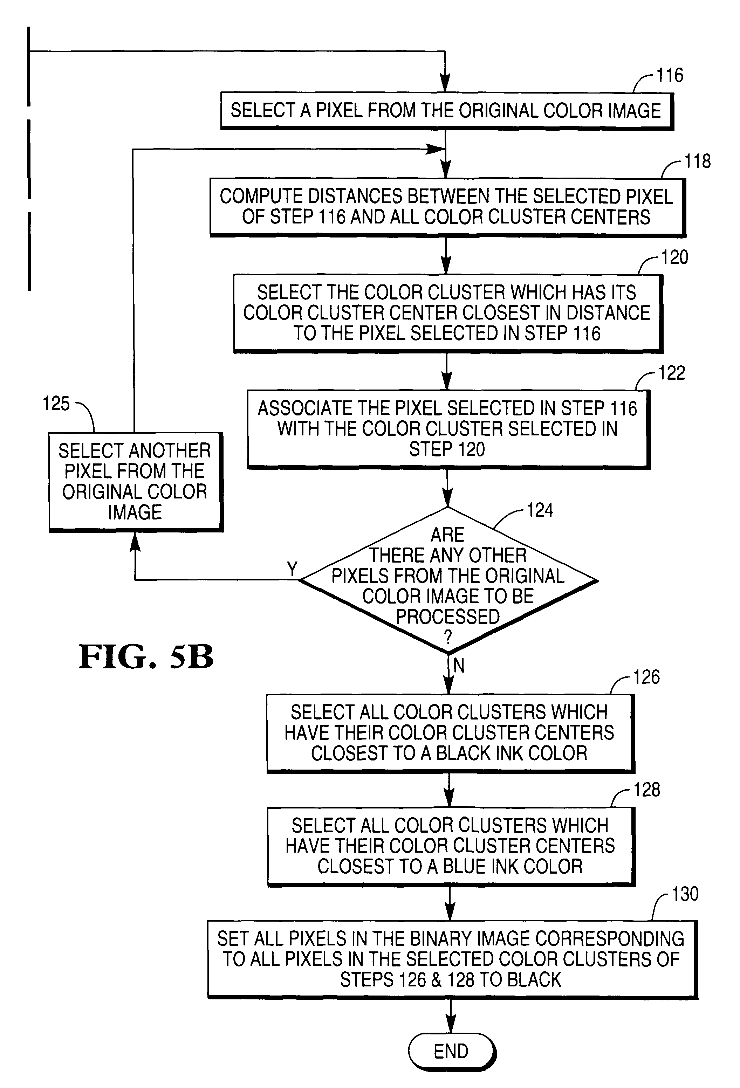

Referring to Figure 5, a flowchart 100 depicts steps of the character enhancement program 50 to provide the enhanced binary image 52 shown in Figure 4. In step 102, all of the pixels from the color image data 42 which correspond to all of the black pixels in the binary image 46 are selected. The program then proceeds to step 104 in which a mean value of all of the pixels selected in step 102 is computed. Also, as shown in step 106, a standard deviation value of all of the pixels selected in step 102 is computed.

The program then proceeds to step 108 in which a determination is made as to whether the standard deviation value computed in step 106 is greater than a predetermined threshold value. If the determination in step 108 is affirmative, then the program proceeds to step 110 in which a new color cluster center is created in a known manner. Then, in step 112, a known c-means algorithm (also known as k-means) is applied to the new color cluster created in step 110. Standard deviation values of all color clusters are computed in step 114. The program then returns back to step 108.

However, if the determination in step 108 is negative, the program proceeds to step 116 in which a pixel is selected from the color image data 42. Distances between the pixel selected in step 116 and the centers of all color clusters are then computed in step 118. In step 120, the color cluster having its center closest in distance to the pixel selected in step 116 is selected. The pixel selected in step 116 and the color cluster selected in step 120 are associated with each other, as shown in step 122.

A determination is then made in step 124 as to whether there are any other pixels from the color image data 42 which still need to be processed. If the determination in step 124 is affirmative, then another pixel (unprocessed) from the color image data 42 is selected, as shown in step 125, and the program loops back through steps 118, 120, and 122 to process that pixel in the same way as just described hereinabove. Once all pixels from the color image data 42 have been processed through steps 118, 120, and 122, the program proceeds to step 126.

In step 126, all color clusters which have their color cluster centers closest to a black ink color are selected. Also, in step 128, all color clusters which have their color cluster centers closest to a blue ink color are selected. The program then proceeds to step 130 in which all of the pixels in the original binary image 46 which correspond to all of the pixels in the color clusters selected in steps 126 and 128 are set to black. The setting of these pixels in the original binary image 46 to black enhances the original binary image. The original binary image 46 is shown in Figs. 1 and 3. The enhanced binary image is designated with reference numeral "52", as shown in Figs. 1 and 4.

Although the above describes use of an RGB (Red, Green, Blue) color space, it is contemplated that other color spaces could be used instead. For example, either a LUV (Luminescence, U chromaticity, V chromaticity) color space or a LAB (Luminescence, A chromaticity, B chromaticity) color space may be used.

An advantage results by using the character enhancement program 50 in accordance with the present invention to enhance characters in the original binary image 46 of the check 12 to provide the enhanced binary image 52 of the check. Since color image data 42 is used, more information is used during the character enhancement process. The result is a more accurate image of the check 12.

From the above description of the invention, those skilled in the art to which the present invention relates will perceive improvements, changes and modifications. Numerous substitutions and modifications can be undertaken without departing from the true spirit and scope of the invention. Such improvements, changes and modifications within the skill of the art to which the present invention relates are intended to be covered by the appended claims.

## Claims

1. A method of enhancing a character in an original binary image of a document which has been originally scanned to obtain color image data, the method comprising the step of:
(a) extracting relevant character information from the color image data to enhance the character in the original binary image of the document.

2. A method according to claim 1, wherein step (a) includes the step of:
(a-1) processing color image data in a number of different color vector planes to extract relevant information therefrom.

3. A method according to claim 2, wherein the number of color vector planes is three including a red color vector plane, a green color vector plane, and a blue color vector plane.

4. A method of processing a bank check having a number of characters thereon, the method comprising the steps of:
(a) scanning the bank check;
(b) obtaining color image data associated with the bank check when the bank check is scanned in step (a);
(c) obtaining grayscale image data associated with the bank check based upon the color image data obtained in step (b);
(d) binarizing the grayscale data obtained in step (c) to provide an original binary image of the bank check; and
(e) extracting relevant character information from the color image data obtained in step (b) to enhance a relatively low quality character in the original binary image of the bank check obtained in step (d).

5. A method according to claim 4, wherein step (d) includes the step of:
(d-1) thresholding the grayscale image data to extract relevant information therefrom.

6. A method according to claim 4 or claim 5, wherein step (e) includes the step of:
(e-1) processing color image data in a number of different color vector planes to extract relevant information therefrom.

7. A method according to claim 6, wherein the number of color vector planes is three including a red color vector plane, a green color vector plane, and a blue color vector plane.
